# EUROPÄISCHE PATENTSCHRIFT

(11) **EP 2 479 097 B1**
(45) Veröffentlichungstag und Bekanntmachung des Hinweises auf die Patenterteilung: **16.05.2018**
(21) Anmeldenummer: 12151542.3
(22) Anmeldetag: 18.01.2012
(51) Int. Cl.: B62K 25/08, F16F 9/48

(54) **Teleskopfedergabelbein mit hydraulischem Endanschlag**
Telescopic suspension fork with hydraulic end stop
Jambe de fourche à ressort télescopique doté d'une butée terminale hydraulique

(30) Priorität: 21.01.2011 DE 102011000281
(43) Veröffentlichungstag der Anmeldung: 25.07.2012
(73) Patentinhaber: WP Performance Systems GmbH, 5222 Munderfing (AT)
(72) Erfinder: Wimmer, Johannes, 84556 Kastl (DE); Kötzinger, Georg, 83334 Inzell (DE)
(74) Vertreter: Söllner, Udo

(56) Entgegenhaltungen:
- WO-A1-03/057553
- WO-A1-2007/046750
- DE-B- 1 015 327
- US-A1- 2008 053 765
- US-B1- 6 234 505

## Beschreibung

Die vorliegende Erfindung betrifft ein Teleskopfedergabelbein mit einem Innenrohr und einem Außenrohr und einer Dämpfungseinrichtung sowie einer Federeinrichtung nach dem Oberbegriff des Anspruchs 1.

Das erfindungsgemäße Teleskopfedergabelbein kann beispielsweise zur Bildung einer Teleskopfedergabel oder auch kurz Telegabel eingesetzt werden, die an einem Motorrad oder beispielsweise auch einem Fahrrad Verwendung findet. Eine solche Telegabel erfüllt die Funktion der Führung eines Vorderrads des angesprochenen Fahrzeugs, übernimmt die Aufgabe der Federung und dient der Dämpfung, wenn sich das Fahrzeug über Fahrbahnunebenheiten bewegt, sorgt also dafür, dass die Federbewegung rasch wieder abklingt und bedient auch die Abstützung eines beim Abbremsen des Vorderrads als Reaktionsmoment aufgebauten Bremsmoments relativ zum Rahmen des Fahrzeugs.

Aufgrund der hohen, an eine Telegabel gestellten Anforderungen, besitzt ein zur Bildung der Telegabel herangezogenes Teleskopfedergabelbein eine Vielzahl von Funktionalitäten und Bauteilen, mit denen beispielsweise auf die Federeigenschaft und die Dämpfungseigenschaft des Teleskopfedergabelbeins Einfluss genommen werden kann.

Zur Herbeiführung einer Dämpfungsfunktion zur Dämpfung der oszillierenden Bewegung des Innenrohrs und Außenrohrs relativ zueinander weisen bekannte Dämpfungseinrichtungen Bohrungen auf, über die ein Dämpfungsfluid in der Form beispielsweise eines Telegabelöls hindurchströmen kann. Zur Herbeiführung einer auf die jeweilige Anforderung des Fahrers beziehungsweise als Reaktion auf die Beschaffenheit der Fahrbahnoberfläche erforderlichen Eigenschaft besitzt die Dämpfungseinrichtung ganz allgemein einstellbare Ventileinrichtungen, über die das Durchströmverhalten des Dämpfungsfluids eingestellt werden kann.

Wenn das Dämpfungsfluid durch die Bohrungen beziehungsweise Ventile strömt, kommt es lokal zur Ausbildung sehr hoher Strömungsgeschwindigkeiten, die so groß sind, dass Gasblasen aufgrund einer gasförmigen Fluidphase entstehen, es tritt Kavitation auf. Um die Bildung von Kavitation zu vermeiden, wird das Dämpfungsfluid unter hohen Druck gesetzt, so dass es gar nicht erst zur Ausbildung von Gasblasen kommen kann.

Anhand der WO 2008/085097 A1 ist eine Vorderradgabel für ein Zweiradfahrzeug bekannt geworden. Bei dieser bekannten Vorderradgabel ist ein Teleskopfedergabelbein vorgesehen, welches ein Innenrohr und ein Außenrohr und eine Dämpfungseinrichtung sowie eine Feder besitzt. Die Feder ist dabei in einem ersten Volumen O1 angeordnet, während die Dämpfungseinrichtung ein zweites Volumen O2 aufweist, die gegeneinander hermetisch abgedichtet sind. Die Dämpfungseinrichtung dieser bekannten Vorderradgabel besitzt zwei voneinander getrennte Fluidvolumina, die wahlweise mit einem Ausgleichsbehälter verbunden werden können. Bei dieser bekannten Vorderradgabel wird es als nachteilig angesehen, dass sich das Fluid in der ersten Kammer, die die Federeinrichtung aufnimmt, mit dem Fluid in der Dämpfungseinrichtung mischen kann, weshalb ein drittes Volumen vorgesehen ist, welches vorzugsweise mit Luft gefüllt ist, und einen direkten Kontakt zwischen dem ersten Volumen O1 und dem zweiten Volumen O2 vermeiden soll.

Anhand der US 2010/0224454 A1 ist ein Stoßdämpfer bekannt geworden, der ein mit Dämpfungsfluid gefülltes Rohr aufweist, welches außen von einer Tragfeder umgeben ist. Das Rohr besitzt eine Drosselblende, in die ein konisch ausgebildeter Stift eintaucht, so dass sich in Abhängigkeit von dem Federweg des Stoßdämpfer der freie Öffnungsquerschnitt der Drosselblende verhindert. Integral in den die Drosselblende ausbildenden Querschnitt eine mittels einer Kugel verschließbare Durchgangsbohrung vorgesehen die dafür sorgt, dass sich bei der Bewegung des Stifts aus der Drosselblende heraus eine Fluidströmung einstellen kann von einer Kammer unterhalb der Drosselblende zu einer Kammer oberhalb der Drosselblende. Bei der Bewegung des Stifts in die Öffnung der Drosselblende hinein, verschließt die Kugel die Durchgangsbohrung, so dass das Dämpfungsfluid aus der Kammer oberhalb der Drosselblende in die Kammer unterhalb der Drosselblende nur über die Drosselblendenöffnung strömen kann.

Darüber hinaus ist anhand der EP 1050696 A2 ein Stoßdämpfer bekannt geworden, der ebenfalls einen konisch verlaufenden Stift aufweist, der benachbart zu einem Befestigungsauge des Stoßdämpfers angeordnet ist und bei einer Relativverlagerung einer zwei Kolben aufweisenden Einheit in eine Drosselblende der die beiden Kolben tragenden Hülse eintauchen kann. Die beiden Kolben besitzen jeweils zwei Federscheibenpakete die beim Einfedern beziehungsweise Ausfedern des Stoßdämpfers eine Durchströmöffnung für Fluid freigeben können. Ein Stoßdämpfer, wie der soeben beschriebene bekannte Stoßdämpfer, zeichnet sich hinsichtlich seiner Konfiguration dadurch aus, dass er ein relativ kleines Verhältnis von Hub zu Kolbendurchmesser aufweist.

Aufgrund des bei einem Stoßdämpfer großen zur Verfügung stehenden Bauraums des den Kolben aufnehmenden Stoßdämpferrohrs, ist es möglich, ein Stoßdämpferrohr mit großen Innendurchmesser vorzusehen, so dass der die Federpakete aufweisende Kolben radial einen großen Bauraum einnehmen kann und somit auch Bauraum zur Verfügung steht, um eine den konischen Stift aufnehmende Blende zusammen mit den Federscheibenpaketen am Kolben angeordnet vorzusehen. Das Verhältnis von Hub zu Kolbendurchmesser bei einem solchen bekannten Stoßdämpfer beträgt üblicherweise drei zu eins.

Anhand der US 2008/0053765 A1 ist eine Vorderradgabel bekannt geworden, welche einen in einem Dämpfungsrohr angeordneten Arbeitskolben aufweist, an dem ein als Rückschlagklappe fungierendes Ventil 45A angeordnet ist, welches bei einer Einfederbewegung der Vorderradgabel durch den sich unterhalb des Arbeitskolbens aufbauenden Arbeitsdruck geöffnet wird und den Strömungsweg für das Gabelöl von der Kammer unterhalb des Arbeitskolbens in die Kammer oberhalb des Arbeitskolbens öffnet. Am unteren Ende des Dämpfungsrohrs ist ein becherförmiger Kragen 70 vorgesehen, in den ein stempelförmiges Ölsperrbauteil 80 eintauchen kann, um den Kragen axial gegen den Bodenbereich des Dämpfungsrohrs zu verschieben, so dass der Kragen dort aufliegt und ein Austreten von Öl aus dem Kragen durch eine im Bereich des Kragenbodens ausgebildete Öffnung zu verhindert wird.

Anhand der WO 2007/046750 A1 ist eine Vorderradgabel bekannt geworden, die eine Dämpfungseinrichtung nach dem so genannten Closed-Cartridge-Prinzip aufweist. Diese bekannte Vorderradgabel besitzt dabei eine im Innenrohr angeordnete Hauptfeder, die von einer Kolbenstange durchsetzt wird. An der Kolbenstange ist ein Dämpferkolben angeordnet, der in einem Innenrohr der Dämpfereinrichtung eine auf- und abgehende Bewegung ausführen kann. Dabei verdrängt er ein in der Dämpfungseinrichtung vorhandenes Dämpfungsfluid aus dem Innenraum des Innenrohrs über Durchlässe, die mit einem koaxial zum Innenraum des Dämpfungsrohrs angeordneten Ringraum verbunden sind, der wiederum in Fluidverbindung steht mit einer im Innenrohr der Dämpfungseinrichtung ausgebildeten Rückströmkammer, so dass sich sowohl die obere als auch die untere Kolbenfläche des Dämpfungskolbens mit dem Dämpfungsfluid in Kontakt befinden. Das Dämpfungsfluid wird bei der oszillierenden Bewegung des Dämpfungskolbens also von der Kompressionskammer in die Rückströmkammer gefördert, wobei in Abhängigkeit der Hubbewegung des Dämpfungskolbens die Kompressionskammer und die Rückströmkammer wechseln.

Ein solches, mit paralleler Dämpfung arbeitendes System besitzt den Vorteil, dass das Dämpfungsfluid ständig unter Druck steht und auf diese Weise Kavitation vermieden wird. Diese bekannte Vorderradgabel besitzt einen hydraulischen Endanschlag in der Form einer zylindrischen Hülse, die im Bereich der Klemmfaust vorgesehen ist und einen Innenraum ausbildet, in den ein zylindrischer, die Hauptfeder abstützender Stützkörper eintauchen kann. Der hydraulische Endanschlag ist in dem mit Dämpfungsöl und Luft gefüllten und auch die Hauptfeder aufnehmenden Federraum des Innenrohrs angeordnet, so dass es beim Eintauchen des Stützkörpers in den Innenraum der Hülse zur ausgeprägten Bildung von Kavitation kommt und infolgedessen zu einem starken Verschäumen des Dämpfungsöls. Infolgedessen stellt sich nach bereits kurzem Betrieb dieser bekannten Vorderradgabel eine deutlich nachlassende Wirkung der Funktion des Endanschlags ein, so dass diese Vorderradgabel für die Anwendung bei einem dynamischen Fahrbewegungen ausgesetzten Motorrad, insbesondere einem Geländesportmotorrad, wenig geeignet ist.

Ausgehend hiervon liegt der vorliegenden Erfindung die Aufgabe zu Grunde, ein Teleskopfedergabelbein mit einem hydraulischen Endanschlag auszubilden, welches auch nach harter und langer und hochdynamischer Beanspruchung mit einem funktionierenden hydraulischen Endanschlag arbeitet und frei ist von Kavitationsproblemen.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft ein Teleskopfedergabelbein mit einem Innenrohr und einem Außenrohr und einer Dämpfungseinrichtung sowie einer Federeinrichtung, die innerhalb einer im Außenrohr ausgebildeten ersten Kammer angeordnet ist und sich gegenüber einer von der Dämpfungseinrichtung gebildeten und unterhalb der ersten Kammer angeordneten zweiten Kammer abstützt, die zur Aufnahme eines Dämpfungsfluids ausgebildet ist, wobei die Dämpfungseinrichtung einen sich an einer Kolbenstange abstützenden Kolben mit einer oberen und einer unteren Kolbenfläche besitzt und der Kolben innerhalb eines weitgehend konzentrisch zum Innenrohr angeordneten Dämpfungsrohrs verlagerbar ist und das Dämpfungsrohr von einer weitgehend konzentrisch zum Dämpfungsrohr angeordneten Ringraumkammer umgeben ist und das Teleskopfedergabelbein eine hydraulische Endanschlageinrichtung aufweist, und die Endanschlageinrichtung innerhalb der Dämpfungseinrichtung angeordnet ist und zur Ausbildung einer federwegabhängigen Dämpfkraft ausgebildet ist und eine Druckbegrenzungseinrichtung aufweist, die eine am Kolben angeordnete Ventileinrichtung aufweist.

Durch die erfindungsgemäß vorgesehene Anordnung der hydraulischen Endanschlageinrichtung innerhalb des Dämpfungsrohrs ist das Problem der Kavitation wirkungsvoll beseitigt. Das Dämpfungsfluid innerhalb des Dämpfungsrohrs steht unter ständigem Druck und wird bei einer Federbewegung des Teleskopfedergabelbeins zwischen den Bereichen unterhalb der unteren Kolbenfläche und oberhalb der oberen Kolbenfläche verschoben und befindet sich in einem Druckraum frei von Luft. Durch die ständige Druckbeaufschlagung des Dämpfungsöls kommt es auch dann, wenn der hydraulische Endanschlag des erfindungsgemäßen Teleskopfedergabelbeins in Funktion tritt, nicht zur Bildung von Gasblasen. Auch bei einem mit hochdynamischen Fahrbewegungen bewegten Fahrrad oder Motorrad, insbesondere Geländersportmotorrad, bei dem der hydraulische Endanschlag während der Fahrbewegungen oftmals in Funktion tritt, beispielsweise beim nahezu vollständigen Eintauchen des Teleskopfedergabelbeins, ist das Problem der Kavitation aufgrund der Funktion des hydraulischen Endanschlags wirkungsvoll vermieden, so dass der hydraulische Endanschlag auch bei einem langen und harten Einsatz des Teleskopfedergabelbeins seine Wirkung nicht verliert.

Dadurch, dass die Endanschlageinrichtung zur Ausbildung einer federwegabhängigen Dämpfkraft ausgebildet ist, tritt die Wirkung des Endanschlags nicht ähnlich der Wirkung einer Sprungfunktion schlagartig in Erscheinung, sondern es wird mit zunehmender Eintauchtiefe des Teleskopfedergabelbeins eine steigende Dämpfkraft der Endanschlageinrichtung erreicht, die linear, degressiv oder progressiv steigend ausgebildet sein kann. Bei einer bevorzugten, linear oder progressiv ansteigenden Dämpfkraft nimmt der Fahrer des mit dem erfindungsgemäßen Teleskopfedergabelbeins ausgestatteten Fahrzeugs den hydraulischen Endanschlag nicht oder kaum wahr und erfährt insbesondere keine dadurch bedingten Ermüdungserscheinungen, dass er ein hartes "Auf-Block-Gehen" des Teleskopfedergabelbeins mit seiner Muskulatur kompensieren muss, wie dies bei dem bekannten Teleskopfedergabelbein der Fall ist, wenn die Wirkung des hydraulischen Endanschlags aufgrund starker Kavitation nachgelassen hat oder vollständig nicht mehr in Erscheinung tritt.

Die erfindungsgemäße Endanschlageinrichtung zeichnet sich zudem durch eine Druckbegrenzungseinrichtung aus, die bei einem starken Anstieg des Druckniveaus unterhalb der unteren Kolbenfläche, also bei einem starken Eintauchen des Teleskopfedergabelbeins, dafür sorgt, dass das Dämpfungsfluid aus dem Bereich unterhalb der Kolbenfläche in den Bereich oberhalb der Kolbenfläche entspannt werden kann.

Es ist dabei nach einer Weiterbildung der Erfindung vorgesehen, dass die Endanschlageinrichtung eine im Bereich eines der ersten Kammer gegenüberliegenden bodenseitigen Endes des Dämpfungsrohres vorgesehene Drosselblende aufweist, in die eine in axialer Verlängerung der Kolbenstange vorgesehene, zumindest abschnittsweise zylindrisch ausgebildete Dämpfungsnadel einführbar ist derart, dass ein frei bleibender Drosselblendenquerschnitt mit sich verändernder Einführtiefe der Dämpfungsnadel veränderbar ist.

Bei dem erfindungsgemäßen Teleskopfedergabelbein ist also die Drosselblende im Bereich des bodenseitigen Endes des Dämpfungsrohres angeordnet und die Dämpfungsnadel taucht bei ihrer Bewegung relativ zur Drosselblende von oben her in die Drosselblende ein und sorgt so dafür, dass sich der frei bleibende Drosselblendenquerschnitt mit sich verändernder Einführtiefe der Dämpfungsnadel verändert. Die Drosselblende ist aufgrund ihrer Anordnung am bodenseitigen Ende des Dämpfungsrohrs sowohl funktional als auch räumlich vom Druckbegrenzungsventil getrennt und dies erst ermöglicht die Integration eines hydraulischen Endanschlags ohne die Bildung von Kavitation in ein Teleskopfedergabelbein und damit in eine damit ausgebildete Teleskopfedergabel.

Ein erfindungsgemäßes Teleskopfedergabelbein wird üblicherweise bei Vorderradgabeln von zu Geländesportzwecken eingesetzten Fahrrädern oder insbesondere Motorrädern eingesetzt, die aufgrund ihres Verwendungszwecks mit ausgesprochen langen Federwegen versehen sind. Im Gegensatz zu Stoßdämpfern müssen diese Vorderradgabeln aber weniger Dämpferkräfte erzeugen, da Stoßdämpfer üblicherweise mit einem Hebelsystem am Fahrzeug angelenkt sind, während Vorderradgabeln direkt angelenkt sind. Da geringere Dämpferkräfte benötigt werden, aber ein sehr feinfühliges Ansprechen der Vorderradgabel benötigt wird, kommen Hauptkolben zum Einsatz, die kleine Kolbenflächen aufweisen. Diese kleinen Kolbenflächen wiederum bedingen Dämpfungsrohre mit kleinen Innendurchmessern, die der Integration eines hydraulischen Endanschlags in das System Grenzen setzen.

Mit dem erfindungsgemäßen Teleskopfedergabelbein ist es aufgrund der räumlichen und funktionalen Trennung der die federwegabhängige Dämpfkraft ausbildenden Einheit und der Druckbegrenzungseinrichtung und der Integration beider Funktionseinheiten in das Dämpfungsrohr gelungen, ein Teleskopfedergabelbein mit einem hydraulischen Endanschlag bereitzustellen, welches das Problem der Kavitation wirkungsvoll verhindert.

Bei der Druckbegrenzungseinrichtung handelt es sich nach einer Weiterbildung der Erfindung um eine am Kolben angeordnete Ventileinrichtung, deren Öffnungsdruck veränderbar ist. Die Ventileinrichtung kann durch Scheibenfederpakete ausgebildet werden, die eine den Hauptkolben durchsetzende Durchtrittsöffnung in Abhängigkeit von dem unterhalb der unteren Kolbenfläche ausgebildeten Dämpfungsdruck öffnen können.

Die Federsteifigkeit der einzelnen Scheibenfedern kann in Abhängigkeit der gewünschten Dämpfungscharakteristik angepasst werden, so dass die Ausbildung von Kavitation im Dämpfungssystem sicher vermieden werden kann.

Es ist dabei nach einer Weiterbildung der Erfindung vorgesehen, dass die Endanschlageinrichtung eine rohrstückförmig ausgebildete Hülse aufweist, die einen Innenraum zur Aufnahme einer Dämpfungsnadel ausbildet und an deren Eintrittsbereich eine ringförmige Gleitbuchse angeordnet ist. Das erfindungsgemäße Teleskopfedergabelbein wird insbesondere zur Bildung einer Vorderradgabel oder Teleskopfedergabel eingesetzt. Je nach dem Einsatzzweck des damit ausgestatteten Fahrrads oder Motorrads erfährt das Teleskopfedergabelbein eine mehr oder weniger starke Durchbiegung, so dass der Fall eintreten kann, dass die Düsennadel beim Eintritt in die Drosselblende oder die Hülse nicht genau mit der Längsmittelachse der Hülse fluchte, sondern im Winkel zu dieser in die Hülse eintritt.

Durch die im Eintrittsbereich der Hülse angeordnete ringförmige Gleitbuchse wird es erreicht, dass die Dämpfungsnadel beim Eintritt in die Hülse mit der aus beispielsweise einem verschleißfesten Kunststoffwerkstoff gebildeten Gleitbuchse in Kontakt kommt und so in Richtung zum Innenraum der Hülse hin abgelenkt wird und ohne Beschädigung an der Hülse und der Dämpfungsnadel in den Innenraum der Hülse geleitet wird.

Der Hülsenkörper kann unterhalb der Gleitbuchse mit einem Innenraum mit größerem Durchmesser als der Innendurchmesser der Gleitbuchse versehen sein, so dass eine Kontaktierung der Hülse durch die Dämpfungsnadel während einer starken Durchbiegung des Teleskopfedergabelbeins sicher vermieden wird.

Nach einer Weiterbildung der Erfindung ist es vorgesehen, dass die Hülse spielbehaftet im Dämpfungsrohr angeordnet ist und am Außenumfang eine Dichtungseinrichtung aufweist, über die ein Eindringen des im Bereich oberhalb der Drosselblende vorhandenen Dämpfungsdrucks in den Bereich radial zwischen Hülse und Dämpfungsrohr vermieden wird.

Wenn die Dämpfungsnadel in die Drosselblende eintritt, kommt es im Bereich unterhalb der unteren Kolbenfläche zur Ausbildung eines hohen Dämpfungsdrucks, der für eine starke Bedämpfung der Bewegung des Hauptkolbens und damit dafür verantwortlich ist, ein "Auf-Block-Gehen" der mit dem erfindungsgemäßen Teleskopfedergabelbein ausgebildeten Teleskopfedergabel zu verhindern.

Dieser hohe Dämpfungsdruck setzt sich im Bereich unterhalb der unteren Kolbenfläche ungerichtet fort und würde demgemäß auch in den Raum radial zwischen Hülse und Dämpfungsrohr gelangen. Die Hülse ist im Dämpfungsrohr nämlich mit Spiel angeordnet, damit sie bei großen Durchbiegungen des Teleskopfedergabelbeins keine starken Querkräfte auf die Dämpfungsnadel übertragen kann. Zur Lagefixierung der Hülse im Dämpfungsrohr und um dafür zu sorgen, dass sich der Dämpfungsdruck nicht in den Bereich zwischen der Hülse und dem Dämpfungsrohr fortsetzen kann, ist an der Hülse außen eine Dichtungseinrichtung in der Form beispielsweise eines O-Rings angeordnet, der für eine schwimmende Lagerung der Hülse im Dämpfungsrohr sorgt und darüber hinaus die Ausbildung des Drucks in den Bereich radial der Hülse zwischen der Hülse und dem Dämpfungsrohr vermeidet.

Andernfalls könnte sich nämlich der hohe Dämpfungsdruck im Bereich zwischen der Hülse und dem Dämpfungsrohr dadurch negativ auswirken, dass er für eine ungewünschte Verformung des Dämpfungsrohr sorgt. Das Dämpfungsrohr ist im Bereich seines unteren Endes radial außen nämlich von einem Trennkolben umgeben, der relativ zum Dämpfungsrohr axial verlagert werden kann und ein Ausgleichsvolumen für von der Kolbenstange verschobenes Dämpfungsfluid bereitstellt. Dadurch, dass der Dämpfungsdruck nicht in den Bereich radial zwischen der Hülse und dem Dämpfungsrohr gelangen kann, wird eine Verformung des Dämpfungsrohrs vermieden und somit auch ein Verkanten des Trennkolbens am Dämpfungsrohr.

Nach einer Weiterbildung der Erfindung ist es außerdem vorgesehen, dass die Dämpfungsnadel einen in Längsrichtung verlaufenden ersten Kanal und einen dazu im Winkel angeordneten zweiten Kanal aufweist, mittels derer und einem in der Kolbenstange in Längsrichtung verlaufenden dritten Kanal ein sich oberhalb der Drosselblende ausbildender Dämpfungsdruck in den Bereich oberhalb der oberen Kolbenfläche zur Beeinflussung des Dämpfungsverhaltens des Teleskopfedergabelbeins ausbreitet.

Über die angesprochenen drei Kanäle kann sich der Dämpfungsdruck in den Bereich oberhalb der oberen Kolbenfläche ausbreiten, wodurch das Dämpfungsverhalten des Teleskopfedergabelbeins angepasst werden kann. Zu diesem Zweck kann auch der Öffnungsquerschnitt des dritten Kanals mittels einer Ventileinrichtung verändert werden. Bei der Ventileinrichtung kann es sich um eine Nadel handeln, die von der Außenseite des Teleskopfedergabelbeins her zu verschoben werden kann, dass sie den Öffnungsquerschnitt des dritten Kanals einstellbar verschließt. Je kleiner der frei bleibende Öffnungsquerschnitt des dritten Kanals ist, desto größer ist die dadurch erreichte Drosselwirkung und desto härter wird das Ansprechen des Teleskopfedergabelbeins.

Nach einer Weiterbildung der Erfindung ist es vorgesehen, dass das Druckbegrenzungsventil und die Dämpfungsnadel in Axialrichtung des Teleskopfedergabelbeins voneinander beabstandet angeordnet sind. Dadurch wird insbesondere die räumliche Trennung der genannten Bauteile erreicht, das Druckbegrenzungsventil ist aber funktional der federwegabhängig arbeitenden Dämpfungsnadel parallel geschaltet, beide Bauteile befinden sich innerhalb des Dämpfungsrohrs angeordnet, so dass es durch diese Anordnung möglich wurde, ein Teleskopfedergabelbein mit einem hydraulischen Endanschlag zu realisieren, der frei von Kavitationswirkung arbeitet.

Die Erfindung wird im Folgenden anhand der Zeichnung näher erläutert. Diese zeigt in:
Fig. 1 eine Längsschnittdarstellung eines Teleskopfedergabelbeins nach einer Ausführungsform gemäß der vorliegenden Erfindung im ausgefederten Zustand;
Fig. 1A die Längsschnittdarstellung nach Fig. 1 im eingefederten Zustand
Fig. 2 eine vergrößerte Darstellung der Einzelheit "B" nach Fig. 1;
Fig. 3 eine vergrößerte Darstellung der Einzelheit "C" nach Fig. 1;
Fig. 4 eine vergrößerte Darstellung der Einzelheit "D" nach Fig. 1A;
Fig. 4A eine vergrößerte Darstellung der Einzelheit "A" nach Fig. 1; und
Fig. 5 eine perspektivische Darstellung einer Teleskopfedergabel, die zwei Teleskopfedergabelbeine nach Fig. 1 der Zeichnung aufweist.

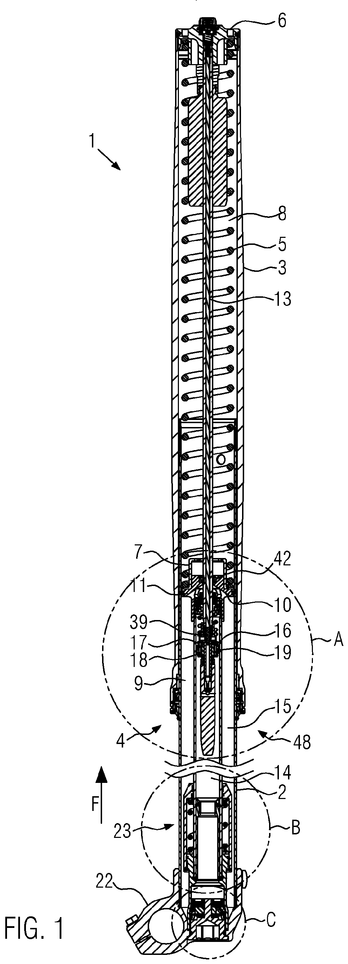

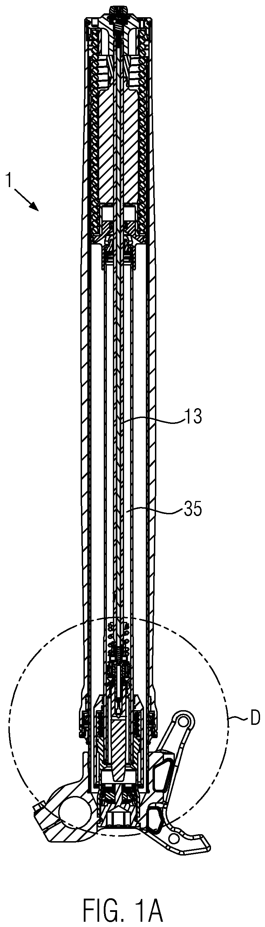

Fig. 1 der Zeichnung zeigt eine Längsschnittdarstellung einer Ausführungsform eines Teleskopfedergabelbeins 1 gemäß der vorliegenden Erfindung.

Das Teleskopfedergabelbein 1 besitzt dabei ein Innenrohr 2, ein Außenrohr 3, eine Dämpfungseinrichtung 4 und eine Federeinrichtung 5 in der Form einer Hauptfeder.

Die Hauptfeder 5 stützt sich an einem am oberen Ende des Teleskopfedergabelbeins 1 angeordneten Verschlussdeckel 6 ab und am unteren Ende der Hauptfeder 5 an einem topförmig ausgebildeten Deckel 7. Die Hauptfeder 5 ist dabei in einer ersten Kammer 8 angeordnet, die mit einem Öl-Luft-Gemisch gefüllt ist. Unterhalb der ersten Kammer 8 ist eine zweite Kammer 9 vorgesehen, die vollständig mit Dämpfungsfluid in der Form eines Gabelöls gefüllt ist.

Unterhalb des Deckels 7 ist ein Cartridgedeckel 10 des nach dem Closed-Cartridge-Prinzip ausgebildeten Teleskopfedergabelbeins 1 vorgesehen.

Eine Dichtungseinrichtung 11 und eine an einer Kolbenstange angeordnete Kolbenstangendichtung 42 dichten die erste Kammer 8 gegen die zweite Kammer 9 fluiddicht ab.

Innerhalb der zweiten Kammer 9 ist ein weitgehend konzentrisch zum Innenrohr 2 angeordnetes Dämpfungsrohr 12 vorgesehen. Das Dämpfungsrohr 12 wird dabei am oberen Ende von dem Cartridgedeckel 10 übergriffen und eingeschlossen. Vom Verschlussdeckel 6 ausgehend erstreckt sich eine Kolbenstange 13 durch den Deckel 7 und den Cartridgedeckel 10 hindurch bis in den Bereich eines Innenraums 14 des Dämpfungsrohrs 12.

Der Innenraum 14 ist genauso wie eine innerhalb der zweiten Kammer 9 konzentrisch zum Dämpfungsrohr 12 ausgebildete Ringraumkammer 15 vollständig mit Dämpfungsfluid gefüllt.

Am unteren Ende der Kolbenstange 13 ist ein Kolben 16 angeordnet, der eine obere Kolbenfläche 17 sowie eine untere Kolbenfläche 18 aufweist. Der Kolben 16 weist radial außen eine Dichtungseinrichtung 19 auf, die ein freies Durchströmen von Dämpfungsfluid aus dem Bereich unterhalb der unteren Kolbenfläche 18 in den Bereich oberhalb der oberen Kolbenfläche 17 vermeidet.

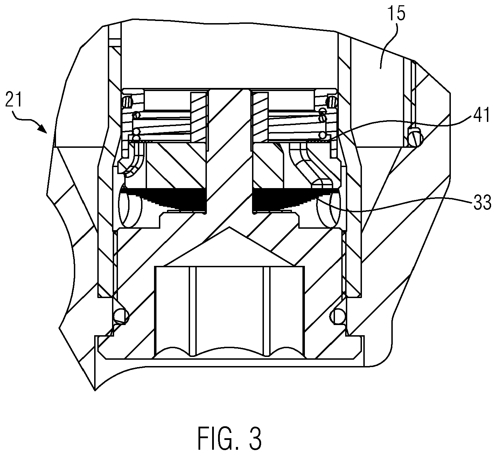

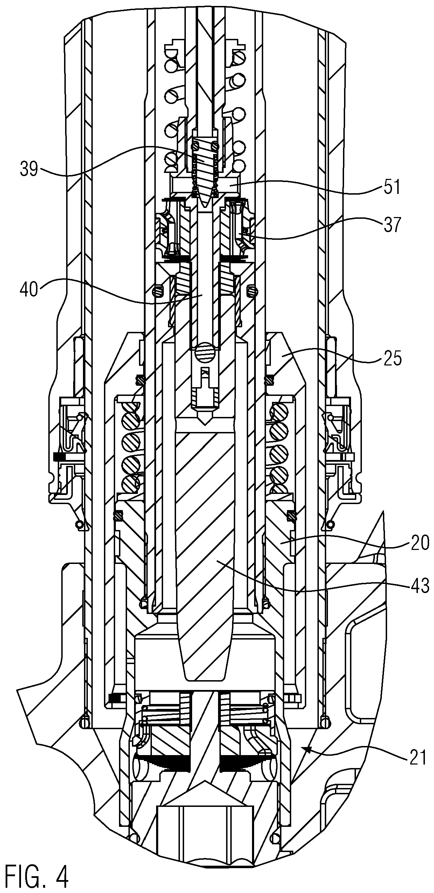

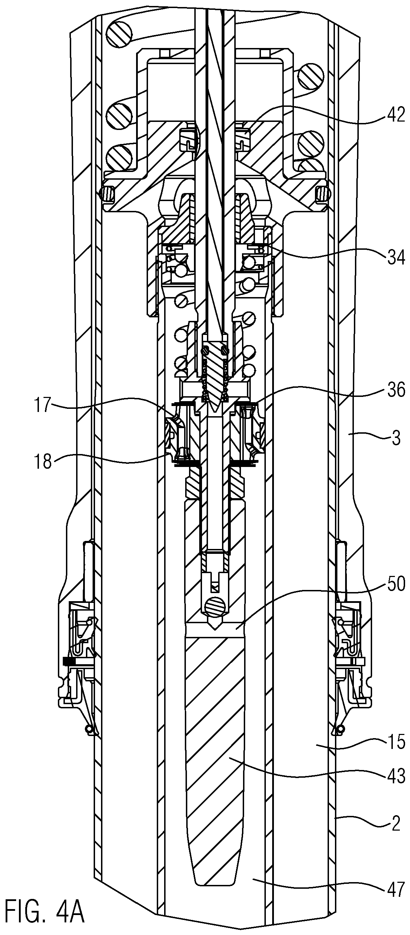

Am unteren Ende des Dämpfungsrohrs 12 ist ein näher anhand von Fig. 4 der Zeichnung ersichtlicher rohrstückförmiger Verschlußkörper 20 angeordnet, der gleichzeitig der Aufnahme eines näher anhand von Fig. 3 und Fig. 4 der Zeichnung ersichtlichen Bodenventils 21 dient. Über das Bodenventil 21 kann Dämpfungsfluid aus dem Dämpfungsrohr 12 unterhalb der unteren Kolbenfläche 18 in den Bereich der Ringraumkammer 15 treten, wie dies nachstehend noch näher erläutert werden wird.

Am unteren Ende des Teleskopfedergabelbeins 1 ist darüber hinaus, wie dies näher anhand von Fig. 1 der Zeichnung ersichtlich ist, eine Klemmfaust 22 vorgesehen, die der Aufnahme einer nicht näher dargestellten Steckachse eines Vorderrads eines Motorrads dient.

Am unteren Ende der Kolbenstange 13 ist eine näher noch anhand der Detaildarstellung in Fig. 4 und Fig. 4A ersichtliche Dämpfungsnadel 43 angeordnet, die entlang eines Teilbereichs ihrer Längserstreckung zylindrisch ausgebildet ist und im Bereich des dem Bodenventil 21 zugewandten Endes sich verjüngend ausgebildet ist.

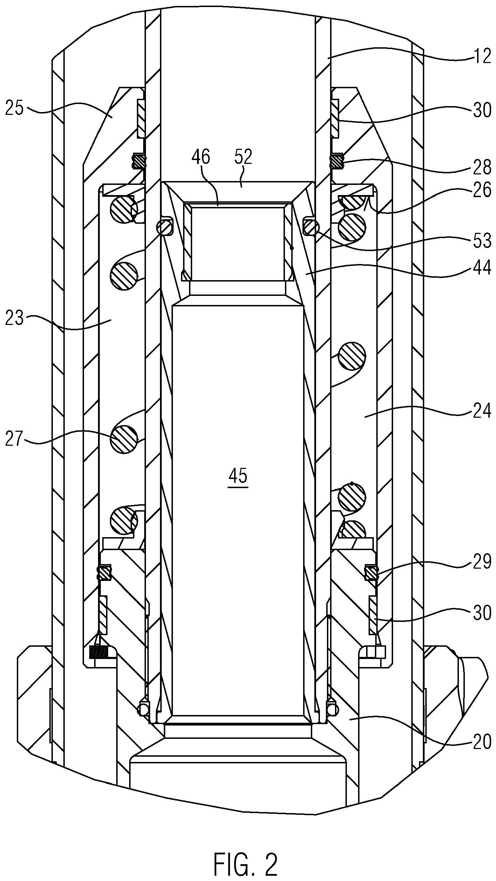

Fig. 4A zeigt dabei die Anordnung der Dämpfungsnadel 43 außerhalb der näher anhand von Fig. 2 ersichtlichen Hülse 44 angeordnet und Fig. 4 zeigt die Dämpfungsnadel 43 vollständig innerhalb des Innenraums 45 der Hülse 44 angeordnet.

Durch die sich verjüngende Konfiguration der Dämpfungsnadel 43 wird erreicht, dass dann, wenn die Dämpfungsnadel 43 bei einer entsprechenden Einfederbewegung der Teleskopfedergabel 31 in den Drosselblendenquerschnitt 46 der Drosselblende 52 nach Fig. 2 eintritt, der sich in dem Dämpfungsdruckraum 47 einstellende Dämpfungsdruck allmählich, nicht aber sprungartig ansteigt.

Die sich verjüngende Konfiguration der Dämpfungsnadel 43 ist dabei so gewählt, dass der Dämpfungsdruck mit zunehmender Einführtiefe der Dämpfungsnadel 43 in den Innenraum 45 der Hülse 44 progressiv ansteigt und somit die hydraulische Endanschlageinrichtung 48, die die Dämpfungsnadel 43, die Hülse 44 und eine Druckbegrenzungseinrichtung in der Form einer Ventileinrichtung 36 aufweist, ihre Wirkung, nämlich ein auf Block gehen des Teleskopfedergabelbeins 1 zu verhindern, nicht schlagartig aufbaut, sondern durch eine zunächst linear und dann progressiv ansteigende Dämpfungswirkung erzielt.

Fig. 2 der Zeichnung zeigt darüber hinaus eine ringförmige Gleitbuchse 49, die beispielsweise aus einem die Reibung verringernden Kunststoffwerkstoff gefertigt ist, und die am Eintrittsbereich der Hülse 44 im Bereich des Drosselblendenquerschnitt 46 angeordnet ist. Wie es anhand von Fig. 2 darüber hinaus ersichtlich ist, besitzt die Hülse 44 unterhalb des Drosselblendenquerschnitt 46 einen Innendurchmesser, der größer ist als der Innendurchmesser der Gleitbuchse 49, was dafür sorgt, dass die Dämpfungsnadel 43, die in Fig. 4 der Zeichnung innerhalb der Hülse 44 angeordnet dargestellt ist, einen Abstand zur Innenwand der Hülse 44 aufweist. Dadurch wird ein Anliegen der Dämpfungsnadel 43 an der Innenwand der Hülse 44 vermieden, auch wenn sich das Teleskopfedergabelbein 13 dynamischen Fahrbewegungen des Fahrzeugs, an dem es angeordnet ist, deutlich durchbiegen sollte.
Tritt die Dämpfungsnadel aus Ihrer in Fig. 4A der Zeichnung dargestellten Stellung außerhalb der Hülse 44 mit ihrem sich verjüngenden Endabschnitt in den Drosselblendenquerschnitt 46 ein, dann steigt der Dämpfungsdruck in dem Dämpfungsdruckraum 47 allmählich an. Die Dämpfungsnadel 43 weist einen zweiten Kanal 50 auf, der sich bei der dargestellten Ausführungsform quer zur Längsrichtung der Dämpfungsnadel 47 erstreckt, über den sich der Dämpfungsdruck und den in Fig. 4 der Zeichnung dargestellten Fluidkanal 40 (erster Kanal) sich der Dämpfungsdruck in den Bereich oberhalb der oberen Kolbenfläche 17 fortsetzen kann.
Über die näher anhand von Fig. 4 ersichtliche Ventileinrichtung 39 in der Form eines von außen verstellbaren Nadelventils kann ein in der Kolbenstange 13 verlaufenden dritten Kanal 51 einstellbar geöffnet werden, so dass sich der Dämpfungsdruck in Abhängigkeit des Öffnungsquerschnitts des dritten Kanals 51, in den Bereich des Dämpfungsrohrs oberhalb der oberen Kolbenfläche 17 fortsetzen kann. Damit kann insgesamt die Dämpfungscharakteristik der Dämpfungseinrichtung 4 eingestellt werden.
Über die in Fig. 2 ersichtliche, am Außenumfang der Hülse 44 angeordnete Dichtungseinrichtung 53 in der Form eines O-Ring wird es erreicht, dass sich der Dämpfungsdruck in dem Dämpfungsdruckraum 47 nicht in den Bereich radial zwischen der Hülse 44 und dem Dämpfungsrohr 12 in unerwünschter Weise ausbreiten kann. Wie es sich nämlich näher anhand von Fig. 4 der Zeichnung ergibt, dient dieser Bereich des Dämpfungsrohrs 12 als Führungsabschnitt für den dort ersichtlichen Trennkolben 25, so dass eine Verformung des Führungsabschnitt dazu führen könnte, dass sich der Trennkolben bei seiner Bewegung relativ zur Führungsabschnitt am Dämpfungsrohr 12 verkantet. Durch die Dichtungseinrichtung 53 wird dies sicher verhindert.

Im Bereich des unteren Endes des Dämpfungsrohrs 12 ist darüber hinaus ein Ausgleichsvolumen 23 für von der Kolbenstange 13 verschobenes Dämpfungsfluid vorgesehen. Wie dies näher noch anhand von Fig. 2 der Zeichnung ersichtlich ist, ist das Ausgleichsvolumen 23 in einer Ringraumkammer 24 ausgebildet, die radial außerhalb des Dämpfungsrohrs 12 und radial innerhalb eines am Verschlußkörper 20 und dem Dämpfungsrohr 12 angeordneten Trennkolbens 25 vorgesehen ist.
Das Ausgleichsvolumen 23 ist dabei konzentrisch zwischen dem Dämpfungsrohr 12 und dem Trennkolben 25 vorgesehen, der das Ausgleichsvolumen 23 fluidisch von dem Dämpfungsfluid in der Ringraumkammer 15 trennt.
Der Trennkolben 25 ist bei der dargestellten Ausführungsform an seiner Oberseite, die der unteren Kolbenfläche 15 des Kolbens 16 gegenüber liegend angeordnet ist, kegelstumpfförmig ausgebildet. Da der Trennkolben 25 vollständig in der Ringraumkammer 15 angeordnet ist, wird er allseitig von Dämpfungsfluid umgeben und steht somit unter Systemdruck.
Der Trennkolben 25 weist eine innenliegende Stirnfläche 26 auf, an der sich eine Federeinrichtung 27 in der Form einer Schraubendruckfeder abstützt, deren gegenüberliegendes Ende sich an einer Stirnfläche des Verschlußkörpers 20 abstützt. Das Ausgleichsvolumen 23 ist mit Gas, beispielsweise Luft gefüllt und wird über eine obere Dichtungseinrichtung 28 sowie eine untere Dichtungseinrichtung 29 gegen das den Trennkolben 25 umgebende Dämpfungsfluid abgedichtet.
Der Trennkolben 25 wird über zwei Führungsbuchsen 30 an dem Dämpfungsrohr 12 sowie dem Verschlußkörper 20 axial geführt, so dass er gegen die Wirkung der Schraubendruckfeder 27 am Dämpfungsrohr 12 und am Verschlußkörper 20 verschiebbar ist. Die Verschiebebewegung des Trennkolbens 25 wird dabei über den in der Ringraumkammer 24 herrschenden Systemdruck gesteuert. Entsprechend der Verschiebebewegung des Trennkolbens 25 vergrößert und verkleinert sich das Ausgleichsvolumen 23.

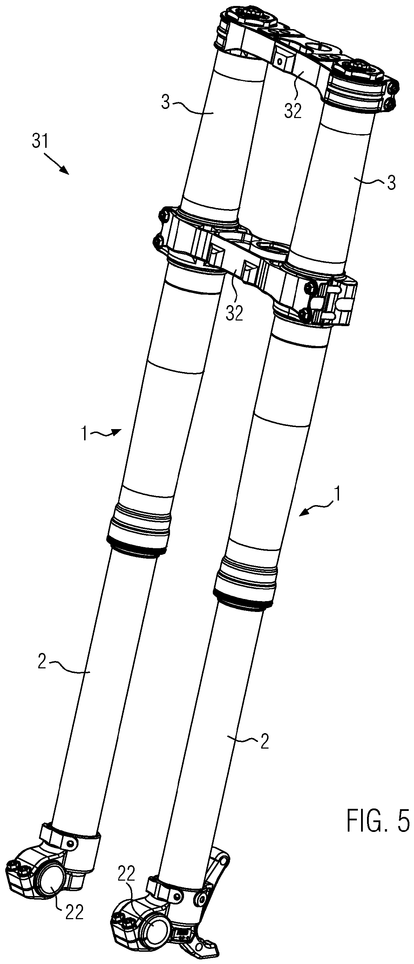

Fährt das nicht näher dargestellte Motorrad, an dem die in Fig. 5 der Zeichnung dargestellte Teleskopfedergabel 31, die zwei Teleskopfedergabelbeine 1 und zwei Gabelbrücken 32 aufweist, über eine Bodenunebenheit, so kommt es aufgrund der Impulsantwort der Teleskopfedergabel 31 zu einem Einfedervorgang der Teleskopfedergabelbeine 1 in Richtung des Pfeils F nach Fig. 1.

Werden die Teleskopfedergabelbeine 1 vollständig eingefedert, so nehmen sie die in Fig. 1A dargestellte Stellung ein. Beim Einfedervorgang wird das Innenrohr 2 relativ zum Außenrohr 3 in Richtung nach oben verlagert, da sich der Kolben 16 über die Kolbenstange 13 an dem Verschlussdeckel 6 abstützt, der im Bereich der oberen Gabelbrücke 32 angeordnet ist, verschiebt die untere Kolbenfläche 18 Dämpfungsfluid aus dem Bereich des Innenraums 14 unterhalb der unteren Kolbenfläche 18. Die Kolbenstange 13 taucht in die Dämpfungseinrichtung 4 ein und verdrängt ein entsprechendes Volumen an Gabelöl.

Ein Teilvolumenstrom des Dämpfungsfluids wird über das in Fig. 3 der Zeichnung dargestellte Bodenventil 21 in Richtung zur Ringraumkammer 15 geleitet. Durch die Druckbeaufschlagung aufgrund des Kolbens 16 kommt es zu einer Öffnung eines Federscheibenstapels 33 des Bodenventils 21, was dazu führt, dass ein Fluiddurchlass im Bodenventil eine Fluidströmung aus dem Innenraum 14 in die Ringraumkammer 15 ermöglicht.

Das in die Ringraumkammer 15 einströmende Dämpfungsfluid strömt über ein vom Systemdruck geöffnetes Rückschlagventil 34 in den Bereich eines Innenraums 35 (siehe Fig. 1A) im Dämpfungsrohr 12, der oberhalb der oberen Kolbenfläche 17 ausgebildet ist. Auf diese Weise befindet sich das Dämpfungsfluid in der zweiten Kammer 9 stets unter Druck, so dass die Bildung von Gasblasen vermieden wird.

Wie es sich anhand von Fig. 1A der Zeichnung ergibt, tritt beim Einfedervorgang des Teleskopfedergabelbeins 1 die Kolbenstange 13 in die zweite Kammer 9 und in den Innenraum 35 im Dämpfungsrohr 12 ein und verdrängt dort vorhandenes Dämpfungsfluid. Das dem eintretenden Volumen der Kolbenstange 13 entsprechende Volumen an Dämpfungsfluid wird ausgeglichen über eine Verlagerungsbewegung des Trennkolbens 25 und eine damit einhergehende Veränderung des Volumens des Ausgleichsvolumens 23.

Fig. 4 zeigt die Relativstellung des Trennkolbens 25 bei vollständig eingefedertem Teleskopfedergabelbein 1, was der Stellung nach Fig. 1A entspricht.

Das Ölvolumen unterhalb der unteren Kolbenfläche 18 befindet sich unter Dämpfungsdruck und wird über das Bodenventil 21 teilweise in die Ringraumkammer 15 geleitet. Ein Teilvolumenstrom strömt über eine Ventileinrichtung 36 mit härterer Federkennlinie als die Federkennlinie der Ventileinrichtung des Bodenventil 21 in den Bereich des Innenraums 35.

Durch die Verschiebung von Dämpfungsfluid aus dem Dämpfungsrohr 12 aufgrund des Eintretens der Kolbenstange 13 in das Dämpfungsrohr 12 und die Dämpfungseinrichtung 4 kommt es zu einer Verlagerungsbewegung des Trennkolbens 25 gegen die Wirkung der Federeinrichtung 27 sowie des innerhalb des Ausgleichsvolumens 23 vorhandene Gases in Richtung nach unten, bis der Trennkolben 25 bei vollständiger Einfederung des Teleskopfedergabelbeins 1 seine in Fig. 1A ersichtliche Endstellung erreicht hat.

Kommt es zu einer Einfederung des Teleskopfedergabelbeins 1, nicht aber einer vollständigen Einfederung, wie sie in Fig. 1A dargestellt ist, so wird der Trennkolben 25 ebenfalls in Richtung nach unten verschoben, das Ausgleichsvolumen 23 wird entsprechend des durch das Eindringen der Kolbenstange 13 in die zweite Kammer 9 verkleinerten Volumens, das für die Aufnahme an Dämpfungsfluid zur Verfügung steht, verkleinert und sorgt so für einen Ölvolumenausgleich.

Das Ausgleichsvolumen 23 ist konzentrisch um das Dämpfungsrohr 12 herum vorgesehen und zwar innerhalb der durch den Trennkolben 25 und das Dämpfungsrohr 12 gebildeten Ringraumkammer 24 und nimmt daher keinen Bauraum ein, der die axiale Länge des Teleskopfedergabelbeins 1 ansteigen lassen würde. Durch die Anordnung des Ausgleichsvolumens 23 direkt benachbart radial zum Dämpfungsrohr 12 nimmt auch der radiale Bauraum des Teleskopfedergabelbeins 1 nicht zu, wie dies bei dem vorstehend beschriebenen, bekannten Dämpfer der Fall ist.

Kommt es zum Ausfedervorgang des Teleskopfedergabelbeins 1, wird also der axiale Abstand zwischen der Klemmfaust 22 und dem Verschlussdeckel 6 wieder vergrößert, bewegt sich der Kolben 16 im Dämpfungsrohr 12 in Richtung nach oben und über die obere Kolbenfläche 17 wird Dämpfungsfluid aus dem Innenraum 35 in Richtung zum unter dem Kolben 16 angeordneten Innenraum 14 verschoben. Dabei wird auch die Kolbenstange 13 aus dem Dämpfungsrohr 12 herausbewegt, der Kolben 16 verdrängt Öl, das aus dem Innenraum 35 über einen Fluiddurchlass 37 im Kolben 16 in Richtung zum Innenraum 14 unterhalb des Kolbens 16 verschoben wird. Im Dämpfungsrohr 12 ist oberhalb des Kolbens 16 die auch als Rückschlagventil wirkende Ventileinrichtung 34 vorgesehen, welche bei einer Bewegung des Kolbens 16 in Richtung nach oben einen Fluiddurchlass aus den Innenraum 35 in Richtung zur Ringraumkammer 15 verschlossen hält und so dafür sorgt, dass das Dämpfungsfluid von oberhalb der oberen Kolbenfläche 17 durch den Fluiddurchlass 37 in Richtung zum Innenraum 14 unterhalb der unteren Kolbenfläche 18 verlagert wird.

Bei der Ausfederbewegung des Teleskopfedergabelbeins 1 fährt die Kolbenstange 13 aus dem Dämpfungssystem 4 heraus und gibt Volumen im Dämpfungssystem 4 frei. Da der Trennkolben 25 über das Gasvolumen im Ausgleichsvolumen 23 und die Federeinrichtung 27 vorgespannt ist, bewegt er sich bei aus dem Dämpfungsrohr 12 heraus bewegender Kolbenstange 13 in Richtung nach oben und das Ausgleichsvolumen 23 nimmt das von der Kolbenstange 13 freigegebene Volumen an Dämpfungsfluid wieder ein und sorgt so dafür, dass nach wie vor beide Kolbenflächen 17, 18 unter Druck stehen und sich die gesamte zweite Kammer 9 unter Druck befindet.

Über eine näher anhand von Fig. 1 und Fig. 4 der Zeichnung ersichtliche Ventileinrichtung 39 in der Form eines von außen betätigbaren Nadelventils kann ein den Kolben 16 durchsetzender Fluidkanal 40 einstellbar freigegeben werden. Dadurch kann in Verbindung mit einem Rückschlagventil eine Verstellung der Dämpfungskraft beim Einfedern und Ausfedern erreicht werden.

Beim Einfedervorgang bewegt sich die Kolbenstange 13 in das Dämpfungssystem hinein. Der Kolben 16 verdrängt dabei Gabelöl, welches zu einem größeren Teilvolumenstrom durch das Bodenventil 21 mit weicher Ventilkennlinie aus dem Dämpfungsrohr 12 heraus strömt. Von dort gelangt das verdrängte Gabelöl über die Ringraumkammer 15 und Durchlässe im Cartridgedeckel 10 über das Rückschlagventil 34 in den Bereich oberhalb der oberen Kolbenfläche 17 und beaufschlagt diese.
Ein kleinerer Teilvolumenstrom fließt durch den Fluiddurchlass 37 des Kolbens 16 direkt hindurch. Das aufgrund der Einfederbewegung der Kolbenstange 13 verdrängte Ölvolumen wird durch eine Verlagerungsbewegung des Trennkolbens 25 und eine damit einhergehende Verkleinerung des Ausgleichsvolumens 23 kompensiert. Der Trennkolben 25 ist ringförmig um das Dämpfungsrohr 12 herum angeordnet und mittels der Führungsbuchsen 30 an Dämpfungsrohr 12 und am rohrstückförmigen Verschlußkörper 20 axial geführt und besitzt aufgrund der Dichtungseinrichtung 28 und 29 ein abgeschlossenes inneres Volumen, welches Gas beinhaltet und das Ausgleichsvolumen 23 bildet.
Die Federeinrichtung 27 beaufschlagt den Trennkolben 25 in Richtung nach oben. Der Trennkolben 25 besitzt eine obere, vom Dämpfungsdruck beaufschlagte kegelstumpfförmige Fläche, deren Projektion größer ist als die vom Systemdruck beaufschlagte untere Fläche des Trennkolbens 25. Dieser besitzt daher eine Differenzkolbenfläche, die vom Systemdruck so beaufschlagt wird, dass der Trennkolben 25 bei steigendem Systemdruck in Richtung nach unten verlagert wird.
Dadurch wird das Dämpfungssystem 4 mit zunehmendem Hub des Teleskopfedergabelbeins 1 und damit zunehmender Verlagerungsbewegung des Dämpfungskolbens bzw. Kolbens 16 steigendem Druck beaufschlagt. Der Innenraum 14 zwischen der unteren Kolbenfläche 18 und dem Bodenventil 21 steht unter Dämpfungsdruck, der Rest der zweiten Kammer 9 steht unter Systemdruck.

Bei der Ausfederbewegung wird die Kolbenstange 13 aus dem Dämpfungsrohr 12 herausbewegt. Der Kolben 16 verdrängt Gabelöl, welches direkt durch den Fluiddurchlass 37 im Kolben 16 vom Innenraum 35 oberhalb des Kolbens 16 in den Innenraum 14 unterhalb des Kolbens 16 strömt. Dabei ist das Rückschlagventil 34 für die Einfederbewegung geschlossen. Das durch das Herausbewegen der Kolbenstange 13 aus dem Dämpfungsrohr 12 freiwerdende Volumen wird vom sich in Richtung nach oben bewegenden Trennkolben 25 über ein Rückschlagventil 41 (siehe Fig. 3) für das Ausfedern in das Dämpfungsrohr 12 in den Innenraum 14 unterhalb des Kolbens 16 zurückgeschoben. Der Raum zwischen dem Kolben 16 und dem Rückschlagventil 34 für das Einfedern steht unter Dämpfungsdruck, der Rest der zweiten Kammer 9 steht unter Systemdruck, der vom Trennkolben 25 bestimmt wird.

Hinsichtlich vorstehend im Einzelnen nicht näher erläuterter Merkmale der Erfindung im Übrigen ausdrücklich auf die ansprechend Zeichnung verwiesen.

### Bezugszeichenliste

- 1.: Teleskopfedergabelbein
- 2.: Innenrohr
- 3.: Außenrohr
- 4.: Dämpfungseinrichtung
- 5.: Federeinrichtung
- 6.: Verschlussdeckel
- 7.: topförmig ausgebildeter Deckel
- 8.: erste Kammer
- 9.: zweite Kammer
- 10.: Cartridgedeckel
- 11.: Dichtungseinrichtung
- 12.: Dämpfungsrohr
- 13: Kolbenstange
- 14: Innenraum
- 15: Ringraumkammer
- 16: Kolben
- 17: obere Kolbenfläche
- 18: untere Kolbenfläche
- 19: Dichtungseinrichtung
- 20: Verschlußkörper
- 21: Bodenventil
- 22: Klemmfaust
- 23: Ausgleichsvolumen
- 24: Ringraumkammer
- 25: Trennkolben
- 26: Stirnfläche
- 27: Federeinrichtungen
- 28: obere Dichtungseinrichtung
- 29: untere Dichtungseinrichtung
- 30: Führungsbuchse
- 31: Teleskopfedergabel
- 32: Gabelbrücke
- 33: Federscheibenstapel
- 34: Rückschlagventil für das Einfedern
- 35: Innenraum
- 36: Ventileinrichtung
- 37: Fluiddurchlass

- 39: Ventileinrichtung (Nadelventil)
- 40: Fluidkanal
- 41: Rückschlagventil für das Ausfedern
- 42: Kolbenstangendichtung
- 43: Dämpfungsnadel
- 44: Hülse
- 45: Innenraum
- 46: Drosselblendenquerschnitt
- 47: Dämpfungsdruckraum
- 48: Endanschlageinrichtung
- 49: Gleitbuchse
- 50: zweiter Kanal
- 51: dritter Kanal
- 52: Drosselblende
- 53: Dichtungseinrichtung

- F:: Pfeil

## Patentansprüche

1. Teleskopfedergabelbein (1), mit einem Innenrohr (2) und einem Außenrohr (3) und einer Dämpfungseinrichtung (4) sowie einer Federeinrichtung (5), die innerhalb einer im Außenrohr (3) ausgebildeten ersten Kammer (8) angeordnet ist und sich gegenüber einer von der Dämpfungseinrichtung (4) gebildeten und unterhalb der ersten Kammer (8) angeordneten zweiten Kammer (9) abstützt, die zur Aufnahme eines Dämpfungsfluids ausgebildet ist, wobei die Dämpfungseinrichtung (4) einen sich an einer Kolbenstange (13) abstützenden Kolben (16) mit einer oberen und einer unteren Kolbenfläche (17; 18) besitzt und der Kolben (16) innerhalb eines weitgehend konzentrisch zum Innenrohr (2) angeordneten Dämpfungsrohrs (12) verlagerbar ist und das Dämpfungsrohr (12) von einer weitgehend konzentrisch zum Dämpfungsrohr (12) angeordneten Ringraumkammer (15) umgeben ist und das Teleskopfedergabelbein eine hydraulische Endanschlageinrichtung (48) aufweist, wobei die Endanschlageinrichtung (48) innerhalb der Dämpfungseinrichtung (4) angeordnet ist und zur Ausbildung einer federwegabhängigen Dämpfkraft ausgebildet ist, **dadurch gekennzeichnet, dass** die Endanschlageinrichtung (48) eine Druckbegrenzungseinrichtung (36) aufweist, die eine am Kolben (16) angeordnete Ventileinrichtung (36) aufweist

2. Teleskopfedergabelbein nach Anspruch 1, **dadurch gekennzeichnet, dass** die Endanschlageinrichtung (48) eine im Bereich eines der ersten Kammer (8) gegenüberliegenden bodenseitigen Endes des Dämpfungsrohres (12) vorgesehene Drosselblende (52) aufweist, in die eine in axialer Verlängerung der Kolbenstange (13) vorgesehene, zumindest abschnittsweise zylindrisch ausgebildete Dämpfungsnadel (43) einführbar ist derart, dass ein frei bleibender Drosselblendenquerschnitt (46) mit sich verändernder Einführtiefe der Dämpfungsnadel (43) veränderbar ist.

3. Teleskopfedergabelbein nach Anspruch 2, **dadurch gekennzeichnet, dass** die Dämpfungsnadel (43) derart ausgebildet ist, dass die Dämpfkraft mit zunehmender Einführtiefe progressiv ansteigt.

4. Teleskopfedergabelbein nach einem der vorstehenden Ansprüche, **dadurch gekennzeichnet, dass** die Ventileinrichtung (36) Scheibenfederpakete aufweist, die zur Öffnung einer den Kolben (16) durchsetzenden Durchtrittsöffnung in Abhängigkeit von dem unterhalb der unteren Kolbenfläche (18) ausgebildeten Dämpfungsdruck ausgebildet sind.

5. Teleskopfedergabelbein nach einem der vorstehenden Ansprüche, **dadurch gekennzeichnet, dass** die Endanschlageinrichtung (48) eine rohrstückförmig ausgebildete Hülse (44) aufweist, die einen Innenraum (45) zur Aufnahme einer Dämpfungsnadel (43) ausbildet und an deren Eintrittsbereich eine ringförmige Gleitbuchse (49) angeordnet ist.

6. Teleskopfedergabelbein nach Anspruch 5, **dadurch gekennzeichnet, dass** die Hülse (44) spielbehaftet im Dämpfungsrohr (12) angeordnet ist und am Außenumfang eine Dichtungseinrichtung (53) aufweist, über die ein Eindringen des im Bereich oberhalb der Drosselblende (52) vorhandenen Dämpfungsdrucks in den Bereich radial zwischen Hülse (44) und Dämpfungsrohr (12) vermieden ist.

7. Teleskopfedergabelbein nach einem der Ansprüche 2 bis 6, **dadurch gekennzeichnet, dass** die Dämpfungsnadel (43) einen in Längsrichtung verlaufenden ersten Kanal (40) und einen dazu im Winkel angeordneten zweiten Kanal (50) aufweist, mittels derer und einem in der Kolbenstange (13) in Längsrichtung verlaufenden dritten Kanal (51) ein sich oberhalb der Drosselblende (52) ausbildender Dämpfungsdruck in den Bereich oberhalb der oberen Kolbenfläche (17) zur Beeinflussung des Dämpfungsverhaltens des Teleskopfedergabelbeins (1) ausbreitet.

8. Teleskopfedergabelbein nach Anspruch 7, **dadurch gekennzeichnet, dass** der Öffnungsquerschnitt des dritten Kanals (51) mittels einer Ventileinrichtung (39) zur Beeinflussung des Dämpfungsverhaltens veränderbar ist.

9. Teleskopfedergabelbein nach einem der Ansprüche 5 bis 8, **dadurch gekennzeichnet, dass** der die Hülse (44) aufnehmende Bereich des Dämpfungsrohrs (12) von einem das Dämpfungsrohr konzentrisch umgebenden und ein Ausgleichsvolumen für ein von der Kolbenstange (13) verschobenes Dämpfungsfluidvolumen aufweisenden Trennkolben (25) umgeben ist.

10. Teleskopfedergabelbein nach einem der Ansprüche 2 bis 9, **dadurch gekennzeichnet, dass** das Druckbegrenzungsventil (36) und die Dämpfungsnadel (43) in Axialrichtung des Teleskopfedergabelbeins (1) voneinander beabstandet angeordnet sind.

11. Teleskopfedergabel mit einer oberen und einer unteren Gabelbrücke (32) sowie zwei Teleskopfedergabelbeinen (1) nach einem der vorstehenden Ansprüche.

## Claims

1. A telescopic suspension fork leg (1), having an inner tube (2) and an outer tube (3) and a damping device (4) and a spring device (5) which is arranged inside a first chamber (8) formed in the outer tube (3) and is supported relative to a second chamber (9) which is formed by the damping device (4), is arranged below the first chamber (8) and is designed to accommodate a damping fluid, the damping device (4) having a piston (16) which is supported on a piston rod (13) and has an upper and a lower piston face (17; 18), and the piston (16) being displaceable inside a damping tube (12) arranged largely concentrically to the inner tube (2), and the damping tube (12) being surrounded by an annular chamber (15) arranged largely concentrically to the damping tube (12), and the telescopic suspension fork leg having a hydraulic end stop device (48), the end stop device (48) being arranged inside the damping device (4) and being designed to form a damping force dependent on the spring deflection, **characterised in that** the end stop device (48) has a pressure-limiting device (36) which has a valve device (36) arranged on the piston (16).

2. The telescopic suspension fork leg according to Claim 1, **characterised in that** the end stop device (48) has an orifice (52) which is provided in the region of a bottom end, opposite the first chamber (8), of the damping tube (12) and into which a damping needle (43), which is provided in the axial extension of the piston rod (13) and is cylindrical at least in some sections, can be inserted in such a manner that an orifice cross-section (46) which remains open can be changed as the insertion depth of the damping needle (43) changes.

3. The telescopic suspension fork leg according to Claim 2, **characterised in that** the damping needle (43) is designed such that the damping force increases progressively as the insertion depth increases.

4. The telescopic suspension fork leg according to any one of the preceding claims, **characterised in that** the valve device (39) has stacks of curved washers which are designed to open a through-opening passing through the piston (16) depending on the damping pressure under the lower piston face (18).

5. The telescopic suspension fork leg according to any one of the preceding claims, **characterised in that** the end stop device (48) has a tubular sleeve (44) which forms an inner space (45) for receiving a damping needle (43) and on the inlet region of which an annular sliding bushing (49) is arranged.

6. The telescopic suspension fork leg according to Claim 5, **characterised in that** the sleeve (44) is arranged with play in the damping tube (12) and has on the outer circumference a sealing device (53), by means of which the damping pressure present in the region above the orifice (52) is prevented from passing into the region radially between the sleeve (44) and the damping tube (12).

7. The telescopic suspension fork leg according to any one of Claims 2 to 6,, **characterised in that** the damping needle (43) has a first duct (40) running in the longitudinal direction and a second duct (50) arranged at an angle thereto, by means of said ducts and a third duct (51) running in the longitudinal direction in the piston rod (13) a damping pressure forming above the orifice (52) spreads into the region above the upper piston face (17) to influence the damping behaviour of the telescopic suspension fork leg (1).

8. The telescopic suspension fork leg according to Claim 7, **characterised in that** the opening cross-section of the third duct (51) can be changed by means of a valve device (39) to influence the damping behaviour.

9. The telescopic suspension fork leg according to any one of Claims 5 to 8, **characterised in that** the region of the damping tube (12) which accommodates the sleeve (44) is surrounded by a separating piston (25) which surrounds the damping tube concentrically and has an equalising volume for a damping fluid volume displaced by the piston rod (13).

10. The telescopic suspension fork leg according to any one of Claims 2 to 9, **characterised in that** the pressure-limiting valve (39) and the damping needle (43) are spaced from each other in the axial direction of the telescopic suspension fork leg (1).

11. A telescopic suspension for having an upper and a lower fork crown (32) and two telescopic suspension fork legs (1) according to any one of the preceding claims.

## Revendications

1. Jambe de fourche à ressort télescopique (1) avec un tube intérieur (2) et un tube extérieur (3) et un dispositif d'amortissement (4) ainsi qu'un dispositif à ressort (5) qui est disposé à l'intérieur d'une première chambre (8) constituée à l'intérieur d'un tube extérieur (3) et s'appuie contre une deuxième chambre (9) formée par le dispositif d'amortissement (4) et disposé en dessous de la première chambre (8), qui est constituée pour recevoir un fluide d'amortissement, le dispositif d'amortissement (4) possédant un piston (16) s'appuyant sur une tige de piston (13) avec une surface de piston supérieure et une inférieure (17 ; 18) et le piston (16) pouvant être déplacé à l'intérieur d'un tube d'amortissement (12) disposé de façon largement concentrique par rapport au tube intérieur (2) et le tube d'amortissement (12) étant entouré par une chambre à compartiment annulaire (15) disposée de façon largement concentrique par rapport au tube d'amortissement (12) et la jambe de fourche à ressort télescopique comportant un dispositif à butée terminale hydraulique (48), le dispositif à butée terminale (48) étant disposé à l'intérieur du dispositif d'amortissement (4) et étant constitué pour former une force d'amortissement en fonction de la course du ressort, **caractérisée en ce que** le dispositif à butée terminale (48) comporte un dispositif de limitation de pression (36) qui comporte un dispositif à soupape (36) disposé sur le piston (16) .

2. Jambe de fourche à ressort télescopique selon la revendication 1, **caractérisée en ce que** le dispositif de butée terminale (48) comporte un obturateur d'étranglement (52) prévu dans la zone d'une extrémité du tube d'amortissement (12) du côté du fond opposé à la première chambre (8) dans lequel peut être introduite une aiguille d'amortissement (43) constituée cylindrique au moins par section, prévue dans le prolongement axial de la tige de piston (13) de telle manière qu'une section d'obturateur d'étranglement (46) restant libre peut être modifiée avec une profondeur d'introduction de l'aiguille d'amortissement (43) variant avec elle.

3. Jambe de fourche à ressort télescopique selon la revendication 2, **caractérisée en ce que** l'aiguille d'amortissement (43) est constituée de telle manière que la force d'amortissement augmente progressivement avec une profondeur d'introduction croissante.

4. Jambe de fourche à ressort télescopique selon l'une quelconque des revendications précédentes, **caractérisée en ce que** le dispositif à soupape (39) comporte des ensembles de ressorts à rondelles qui sont constitués pour l'ouverture d'une ouverture de passage traversant le piston (16) en fonction de la pression d'amortissement constituée en dessous de la surface inférieure de piston (18).

5. Jambe de fourche à ressort télescopique selon l'une quelconque des revendications précédentes, **caractérisée en ce que** le dispositif à butée terminale (48) comporte un manchon (44) constitué de forme tubulaire, qui constitue un compartiment intérieur (45) pour recevoir une aiguille d'amortissement (43) et sur la zone d'entrée de laquelle est constituée une douille de glissement (49) de forme annulaire.

6. Jambe de fourche à ressort télescopique selon la revendication 5, **caractérisée en ce que** le manchon (44) est disposé avec du jeu dans le tube d'amortissement (12) et comporte un dispositif d'étanchéification (53) sur la périphérie extérieure par le biais duquel une pénétration de la pression d'amortissement présente dans la zone au-dessus de l'obturateur d'étranglement (52) est évitée radialement dans la zone entre le manchon (44) et le tube d'amortissement (12).

7. Jambe de fourche à ressort télescopique selon l'une quelconque des revendications 2 à 6, **caractérisée en ce que** l'aiguille d'amortissement (43) comporte un premier conduit (40) passant dans le sens longitudinal et un deuxième conduit (50) disposé en angle à cet effet, au moyen desquels et d'un troisième conduit (51) passant dans la tige de piston (13) dans le sens longitudinal une pression d'amortissement se constituant au-dessus de l'obturateur d'étranglement (52) se propage pour influencer le comportement d'amortissement de la jambe de fourche à ressort télescopique (1) dans la zone de la surface supérieure de piston (17).

8. Jambe de fourche à ressort télescopique selon la revendication 7, **caractérisée en ce que** la section d'ouverture du troisième conduit (51) peut être modifiée au moyen d'un dispositif à soupape (39) pour influencer le comportement d'amortissement.

9. Jambe de fourche à ressort télescopique selon l'une quelconque des revendications 5 à 8, **caractérisée en ce que** la zone recevant le manchon (44) du tube d'amortissement (12) est entourée par un piston de séparation (25) entourant de façon concentrique le tube d'amortissement et comportant un volume d'équilibrage pour un volume de fluide d'amortissement repoussé par la tige de piston (13).

10. Jambe de fourche à ressort télescopique selon l'une quelconque des revendications 2 à 9, **caractérisée en ce que** la soupape de limitation de pression (39) et l'aiguille d'amortissement (43) sont disposées à distance l'une de l'autre en direction axiale de la jambe de fourche à ressort télescopique (1).

11. Fourche à ressort télescopique avec un pontet de fourche supérieur et un inférieur (32) ainsi que deux jambes de fourche à ressort télescopique (1) selon l'une quelconque des revendications précédentes.
